# EUROPEAN PATENT SPECIFICATION

(11) **EP 1 619 112 B1**
(45) Date of publication and mention of the grant of the patent: **03.09.2008**
(21) Application number: 04016961.7
(22) Date of filing: 19.07.2004
(51) Int. Cl.: B62K 11/00, F02M 35/16

(54) **Arrangement of air cleaner for scooters**
Anordnung eines Luftfilters für Motorroller
Aménagement d'un filtre à air pour scooter

(43) Date of publication of application: 25.01.2006
(73) Proprietor: Kwang Yang Motor Co., Ltd., Kaohsiung City (TW)
(72) Inventor: Chen, Chien Hung, 48 Regent Street Cambridge CB2 1FD (GB); Lin, Yung Chang, 48 Regent Street Cambridge CB2 1FD (GB)
(74) Representative: Horak, Michael

(56) References cited:
- EP-A- 0 707 141
- FR-A- 2 748 702
- PATENT ABSTRACTS OF JAPAN vol. 2003, no. 11, 5 November 2003 (2003-11-05) & JP 2003 182675 A (YAMAHA MOTOR CO LTD), 3 July 2003 (2003-07-03)
- PATENT ABSTRACTS OF JAPAN vol. 1998, no. 13, 30 November 1998 (1998-11-30) & JP 10 205400 A (HONDA MOTOR CO LTD), 4 August 1998 (1998-08-04)
- PATENT ABSTRACTS OF JAPAN vol. 0170, no. 99 (M-1373), 26 February 1993 (1993-02-26) & JP 04 292279 A (HONDA MOTOR CO LTD), 16 October 1992 (1992-10-16)
- PATENT ABSTRACTS OF JAPAN vol. 0170, no. 53 (M-1361), 3 February 1993 (1993-02-03) & JP 04 262982 A (SUZUKI MOTOR CORP), 18 September 1992 (1992-09-18)
- PATENT ABSTRACTS OF JAPAN vol. 1996, no. 11, 29 November 1996 (1996-11-29) & JP 08 175452 A (YAMAHA MOTOR CO LTD), 9 July 1996 (1996-07-09)
- PATENT ABSTRACTS OF JAPAN vol. 2000, no. 20, 10 July 2001 (2001-07-10) & JP 2001 063665 A (YAMAHA MOTOR CO LTD), 13 March 2001 (2001-03-13)
- PATENT ABSTRACTS OF JAPAN vol. 1996, no. 04, 30 April 1996 (1996-04-30) & JP 07 324656 A (SUZUKI MOTOR CORP), 12 December 1995 (1995-12-12)
- PATENT ABSTRACTS OF JAPAN vol. 0175, no. 27 (M-1484), 22 September 1993 (1993-09-22) & JP 05 139364 A (SUZUKI MOTOR CORP), 8 June 1993 (1993-06-08)
- PATENT ABSTRACTS OF JAPAN vol. 0184, no. 08 (M-1647), 29 July 1994 (1994-07-29) & JP 06 117338 A (SUZUKI MOTOR CORP), 26 April 1994 (1994-04-26)

## Description

### BACKGROUND OF THE INVENTION

### 1. Field of the Invention

This invention is related to a scooter with an improvement in the arrangement of an air cleaner, in particular for scooters with large cylinder volume.

### 2. Description of the Prior Art

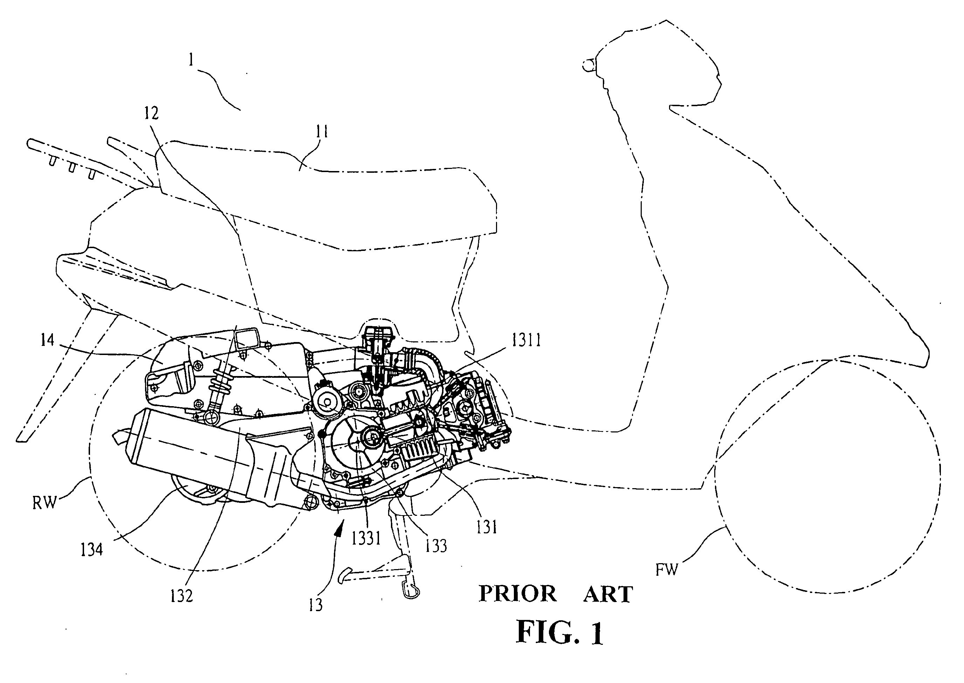

Fig. 1 illustrates how the air cleaner is arranged in a conventional scooter. As shown, the conventional scooter 1 has a seat 11 and a compartment 12 under which there is a power unit 13 having an engine 131, a transmission box 132, a crankshaft case 133, and a gear box 134. The clean air required by the engine 131 is obtained from an air cleaner 14. The air cleaner 14 is used for supplying clean air to mix with fuel oil to form fuel gas which is then transmitted to the engine 131 for combustion thereby generating power and therefore pushing the piston 1311 to reciprocate rapidly. Then, the piston 1311 drives the crankshaft 1331 to rotate within the crankshaft case 133 thus driving the belt transmission mechanism in the transmission box 132. Thereafter, the belt transmission mechanism drives the gear train in the gear box 134 to drive the rear wheel which will in turn drive the front wheel to rotate, enabling the scooter 1 to travel.

However, the air cleaner 14 is fixedly mounted on the transmission box 132 of the power unit 13, so that when the scooter 1 goes to make the power unit 13 oscillate, the air cleaner 14 will oscillate with the power unit 13. Hence, it is impossible to arrange any other component part(s) within the range of the oscillation. The arrangement of the air cleaner 14 is only suitable for scooters with small cylinder volume. As for scooters with large cylinder volume, the transmission box 132 will be larger than that of scooters with small cylinder volume, and so arrangement space of the air cleaner 14 will be limited. Furthermore, the air cleaner 14 will probably interfere with other machine parts when the air cleaner 14 is oscillated with the power unit 13.

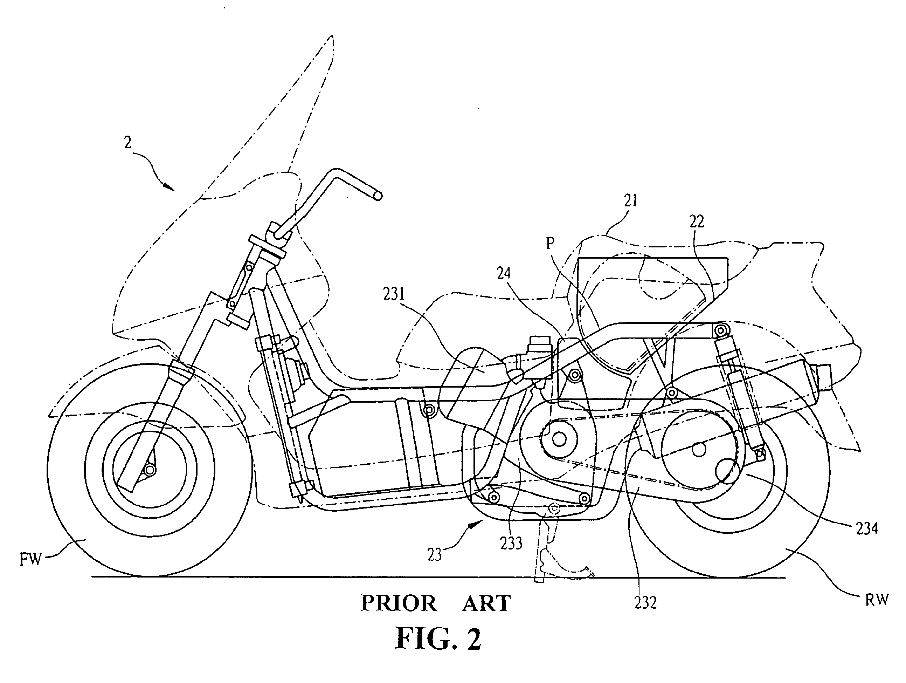

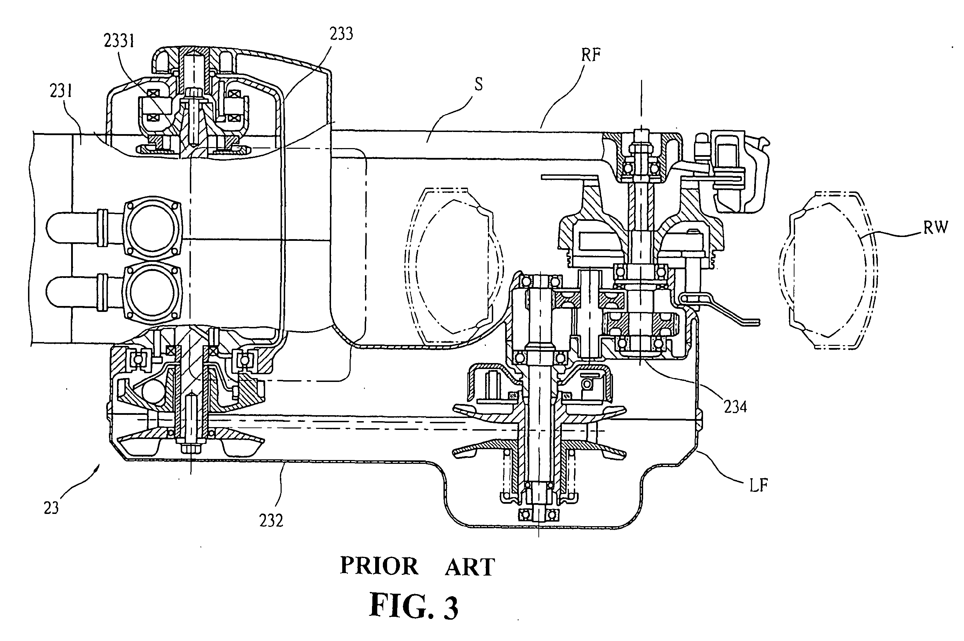

In order to solve this problem, an arrangement of the air cleaner especially designed for scooters with large cylinder volume has been developed (see FIG 2). As illustrated, the scooter 2 is provided with a power unit 23 under the seat 21 and the compartment 22. The power unit 23 comprises an engine 231, a transmission box 232, a crankshaft case 233 and a gear box 234. Referring to FIG 3, the transmission box 232 forms a left fork LF of the power unit 23, and a rod S forms a right fork RF of the power unit 23. The gear box 234, the left fork LF and the right fork RF constitute a U-shaped frame which will oscillate with respect to the crankshaft 2331, thereby making it impossible to mount the air cleaner 24 on the transmission box 232. Hence, the air cleaner 24 must be mounted under the compartment between two sides of the frame P, thus limiting the volume of the compartment 22 and therefore making it unfit for practical use.

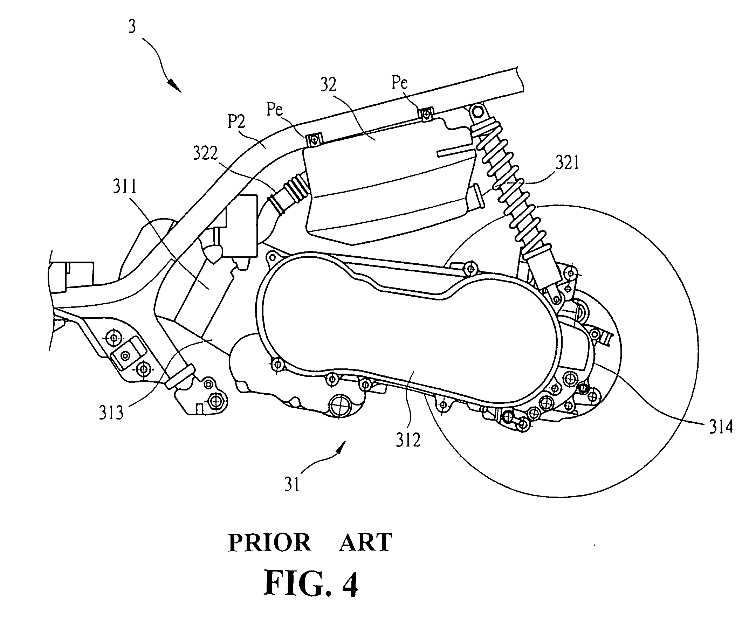

FIG 4 illustrates another conventional arrangement of the air cleaner in a scooter. As can be seen, the scooter 3 is provided with a power unit 31 under the seat and the compartment. The power unit 31 includes an engine 311, a transmission box 312, a crankshaft case 313 and a gear box 314. The air cleaner 32 is fixedly mounted on the frame P2 by screws extending through the lugs Pe on the frame P2. The air inlet 321 and the air outlet 322 of the air cleaner 32 are installed right under the frame P2, so that the body of the air cleaner 32 has to extend downwardly thereby increasing the vertical size and therefore limiting the design of the body cover in vertical direction. JP 2003 182675 A discloses a scooter according to the preamble of claim 1 comprising an air cleaner waterproofing structure.

JP 2003 182675 A is designed to provide an air cleaner waterproofing structure of capable of surely preventing water from intruding into the air cleaner and of improving engine performance by reducing suction resistance. However, this reference fails to disclose any means to maximize the utilization of the space of a scooter and prevent the air cleaner from oscillating with the power unit and getting into interference with the other component parts.

JP 5 139364 A discloses an exhaust emission control device for scooter. This reference is designed for enabling an air cleaner to be installed in the vicinity of an engine unit without giving unreasonableness to the part layout in the vicinity of the engine unit. Similarly, this reference fails to disclose or teach means for maximizing the utilization of the space of a scooter and preventing the air cleaner from oscillating with the power unit and getting into interference with the other component parts.

It is, therefore, an object of the present invention to provide a scooter with an improvement in the arrangement of an air cleaner which can obviate and mitigate the above-mentioned drawbacks.

This problem is solved by a scooter as defined in claim 1.

### SUMMARY OF THE INVENTION

This invention is related to an improvement in the arrangement of an air cleaner for scooters, and in particular to one for scooters with large cylinder volume.

It is the primary object of the present invention to provide a scooter with an air cleaner arrangement wherein the air inlet of the air cleaner is arranged at one side of the frame, the air outlet of the air cleaner is mounted at the other side of the frame, and the air inlet of the air cleaner is installed between the frame and the body cover, so that frame is located between the air inlet and the air outlet thereby enabling the space between the frame and the body cover to be fully utilized and preventing the air cleaner from oscillating with the power unit and getting into interference with the other component parts.

It is another object of the present invention to provide a scooter with an air cleaner arrangement wherein air inlet of the air cleaner is arranged in parallel to one side of the frame and one side of the frame is received in the first recess of the air cleaner thereby making the arrangement between the air cleaner and the frame more compact and minimizing the influence to the other component parts.

It is further object of the present invention to provide a scooter with an air cleaner arrangement wherein the air cleaner is fastened to the frame in front of the shock absorber and has a second recess for receiving the compartment thereby further making the arrangement more compact and maximizing the utilization of the space of a scooter.

The foregoing objects and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 illustrates how the air cleaner is arranged in a conventional scooter;
FIG 2 illustrates how the air cleaner is arranged in another conventional scooter;
FIG 3 is a sectional view of FIG. 2;
FIG 4 illustrates how the air cleaner is arranged in another conventional scooter;
FIG 5 illustrates how the air cleaner is arranged in a scooter according to present invention;
FIG 6 is a perspective view of the air cleaner according to the present invention;
FIG 7 is another perspective view of the air cleaner according to the present invention; and
FIG 8 illustrates how the air cleaner, the frame and the cover are joined together.

### DETAILED DESCRIPTION OF THE PREFERRED EMBODIMENT

For the purpose of promoting an understanding of the principles of the invention, reference will now be made to the embodiment illustrated in the drawings. Specific language will be used to describe same. It will, nevertheless, be understood that no limitation of the scope of the invention is thereby intended, alterations and further modifications in the illustrated device, and further applications of the principles of the inventions as illustrated herein being contemplated as would normally occur to one skilled in the art to which the invention relates.

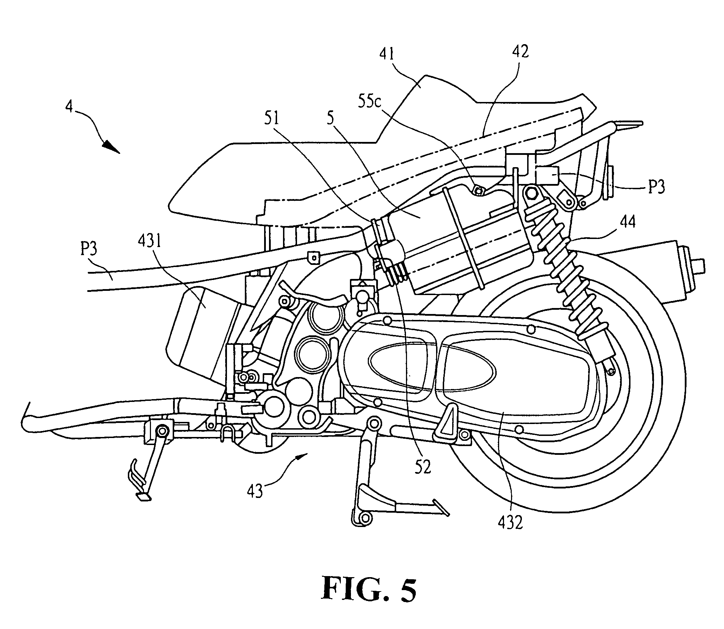

Referring to FIG 5, the scooter 4 according to the present invention comprises a frame P, an air cleaner 5, a seat 41, a scooter body cover C, a compartment 42 and a power unit 43. The power unit 43 is mounted under the compartment 42 and the seat 41 of the scooter 4. The frame P comprises two parallel tubes in longitudinal direction and several tubes in lateral direction of the scooter 4. The power unit 43 generally comprises an engine 431, a transmission box 432, and a gear box (not shown). The power unit 43 is used for supplying power to the scooter 4 and is well known in the art. Hence, it is no longer necessary to describe the power unit 43 here in detail. Above the transmission box 432 of the power unit 43 is mounted a shock absorber 44. The shock absorber 44 is connected between the transmission box 432 and the frame P3P. The clean air required by the engine 431 of the power unit 43 is supplied by the air cleaner 5 which is fixedly mounted on a tube P3 of the frameP in longitudinal direction.

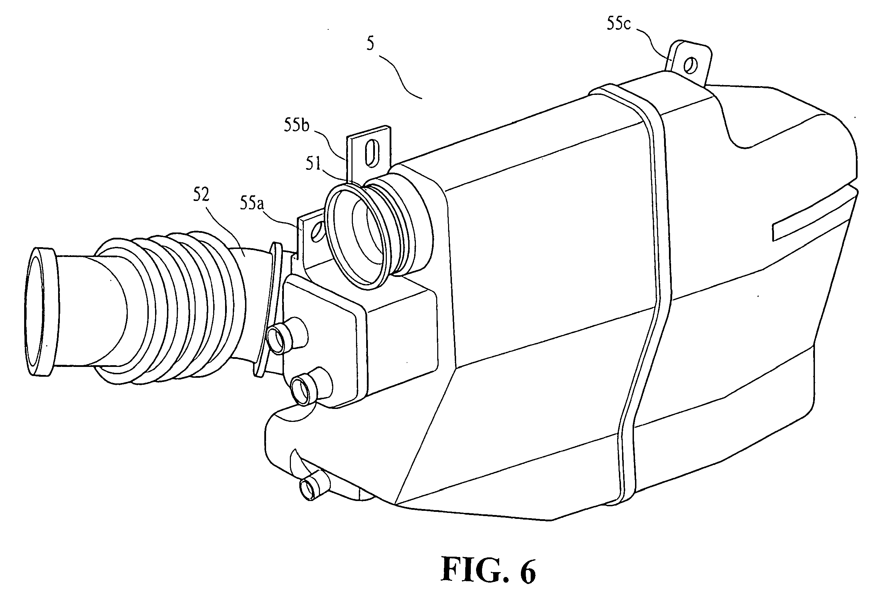

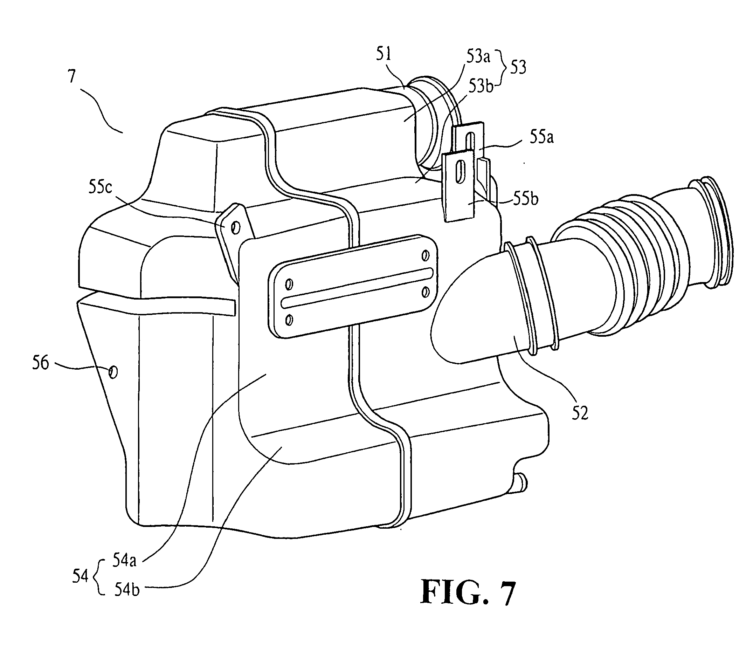

Referring to FIGS. 6, 7 and 8, the air cleaner 5 at least includes an air inlet 51 and an air outlet 52. One side of the air cleaner 5 is formed with a first recess 53 at the upper portion and a second recess 54 at the lower portion. The first recess 53 includes a vertical side 53a and a horizontal side 53b, while the second recess 54 includes a vertical side 54a and a horizontal side 54b. The vertical side 54a has a larger height than the vertical side 53a. The first recess 53 and the second recess 54 are designed to receive the tube P3 and the air outlet 52, respectively. The air cleaner 5 is provided with three lugs 55a, 55b and 55c and a threaded hole 56 close to the first recess 53, which are aligned with lugs Pe1, Pe2, Pe3 and Pe4 respectively, thereby enabling the air cleaner 5 to be conveniently fastened on the tube P3 by screws 6.

The air inlet 51 of the air cleaner 5 is mounted close to the vertical side 53a of the first recess 53, while the air outlet 52 is arranged on the vertical side 54a of the second recess 54.

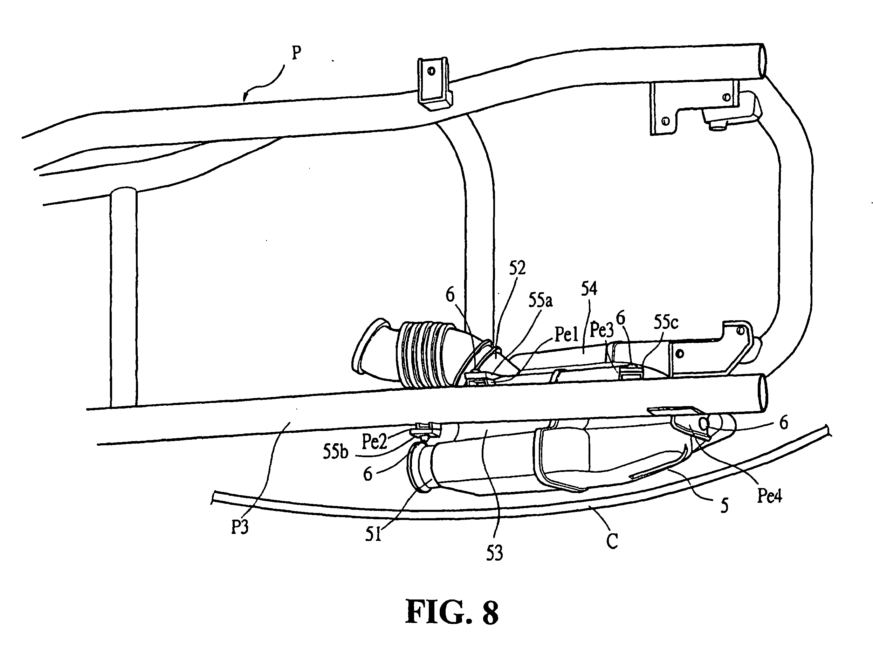

Referring to FIG 8, the air cleaner 5 is fastened to the tube P3 by the screws 6 extending through the lugs 55a, 55b, 55c and threaded hole 56 and the ears Pe1, Pe2, Pe3 and Pe4. When the air cleaner 5 is fastened to the tube P3, the air inlet 51 of the air cleaner 5 is arranged outside of the tube P3, i.e. between the tube P3 and the scooter body cover C. Meanwhile, the tube P3 is disposed between the air inlet 51 and the air outlet 52 of the air cleaner 5 and located in the first recess 53. The compartment 42 is arranged in the second recess 54 of the air cleaner 5, so that the volume of the compartment 42 will be maximized. Furthermore, the air cleaner 5 is fastened to the tube P3 and disposed in front of the shock absorber 44 (see FIG 5). Moreover, the air inlet 51 and the air outlet 52 of the air cleaner 5 are arranged in the same direction. The air inlet 51 is arranged in parallel to one side of the tube P3.

The present invention is characterized in that when the air cleaner 5 is fastened to the tube P3, the air inlet 51 of the air cleaner 5 will be installed between the outer side of the tube P3 and the inner side of the scooter body cover 3, while the air outlet 52 is arranged at the inner side of the tube P3. Further, the air inlet 51 and the air outlet 52 are arranged on different vertical positions of the air cleaner 5, and the tube P3 is disposed on a different vertical level as the air outlet 52. By means of this arrangement, the space between the tube P3 and the scooter body cover C is fully utilized thereby increasing the space utilization efficiency of scooters. Further, the air cleaner 5 will not move with the power unit 43 thereby effectively preventing the air cleaner 5 from getting interference with the large transmission box of scooters with large cylinder volume. Further, the air inlet 51 of the air cleaner 5 is arranged between the tube P3 and the scooter body cover C and the tube P3 is arranged in the first recess 53 thus providing a compact arrangement between the air cleaner 5 and the tube P3 and therefore reducing the influence of the arrangement of the air cleaner 5 to the other machine parts. Similarly, the air cleaner 5 is fastened to the tube P3 in front of the shock absorber 44. The second recess 54 is located close to the compartment 42 thereby making the arrangement more compact and therefore effectively maximizing the space utilization of the scooter.

It will be understood that each of the elements described above, or two or more together may also find a useful application in other types of methods differing from the type described above.

While certain novel features of this invention have been shown and described and are pointed our in the annexed claim, it is not intended to be limited to the details above, since it will be understood that various omissions, modifications, substitutions and changes in the forms and details of the device illustrated and in its operation can be made by those skilled in the art without departing in any way from the scope of the present invention as defined by the appended claims.

## Claims

1. A scooter (4) comprising a frame(P), an air cleaner (5), a seat (41), a scooter body cover (C), a compartment (42) and a power unit (43) under said compartment(42), wherein said frame (P) comprises two tubes in longitudinal direction and several tubes in lateral direction of the scooter, said air cleaner (5) has an air inlet (51) and an air outlet (52), and said air cleaner (5) is fastened to a first one (P3) of said tubes in longitudinal direction, **characterized in that** said air inlet (51) is arranged at one side of said first one (P3) of said tubes in longitudinal direction and said air outlet (52) is arranged at the other side of said first one of said tubes in longitudinal direction with respect to a top view of said scooter (4) thereby arranging said air inlet (51) and said air outlet (52) on different sides of said first one (P3) of said tubes in longitudinal direction, said air inlet (51) is arranged between said first one (P3) of said tubes in longitudinal direction and said scooter body cover (C), said air cleaner (5) is formed with a first recess (53) at an upper portion and a second recess (54) at a lower portion, said air inlet (51) and said air outlet (52) are arranged on different vertical positions of said air cleaner (5), and said firstone (P3) of said tubes comprises sections with different vertical position within said scooter (4) and there is at least one section of said first one (P3), which is arranged on the same vertical level as said air outlet (52).

2. The scooter as claimed in claim 1, wherein said air inlet (51) is arranged in parallel on said first one (P3) of said tubes in longitudinal direction.

3. The scooter as claimed in claim 1, further comprising a transmission box connected to said frame via shock absorbers.

4. The scooter as claimed in claim 1, wherein said second recess (54) of said air cleaner (5) receives a compartment of said scooter.

5. The scooter as claimed in claim 1, wherein said air inlet (51) and said air outlet (52) are arranged in the same direction.

## Patentansprüche

1. Ein Motorroller (4), der einen Rahmen (P), einen Luftfilter (5), einen Sitz (41), eine Rumpfverkleidung (C), ein Fach (42) und darunter eine Antriebseinheit (43) besitzt, wobei besagter Rahmen (P) zwei Rohre in Längs- und mehrere Rohre in Querrichtung des Motorrollers hat und bei dem der Luftfilter (5) einen Lufteinlaß (51) und einen Luft aus laß (52) enthält und bei dem der Luftfilter (5) an dem ersten (P3) der Rohre in Längsrichtung befestigt ist und **dadurch gekennzeichnet, daß**, wenn man von oben auf den Motorroller (4) schaut der Lufteinlaß (51) auf einer Seite des ersten Rohres (P3) in Längsrichtung und der Luftauslaß (52) auf seiner anderen Seite angebracht ist, das heißt, Luftein- und Luftauslaß auf verschiedenen Seiten des ersten (P3) Rohres in Längsrichtung sind und bei dem der Lufteinlaß (51) zwischen erstem (P3) Rohr und der Rumpfverkleidung (C) ist und bei dem der Luftfilter (5) im Oberteil eine erste (53) und im Unterteil eine zweite (54) Einbuchtung hat, sowie Lufteinlaß (51) und Luftauslaß (52) auf verschiedener Höhe des Luftfilters (5) liegen und besagtes erstes (P3) Rohr Abschnitte von wechselnder vertikaler Lage innerhalb des Motorrollers (4) hat, von denen mindestens einer auf der selben vertikalen Ebene ist wie der Luftauslaß (52).

2. Der Motorroller aus Anspruch 1, bei dem besagter Lufteinlaß (51) parallel zu besagtem erstem (P3) Rohr in Längsrichtung ist.

3. Der Motorroller aus Anspruch 1, der zusätzlich eine Getriebeeinheit enthält, die mit dem Rahmen durch Stoßdämpfer verbunden ist.

4. Der Motorroller aus Anspruch 1, bei dem die zweite (54) Einbuchtung des Luftfilters (5) ein Fach des Motorrollers aufnimmt.

5. Der Motorroller aus Anspruch 1, bei dem Lufteinlaß (51) und Luftauslaß (52) in dieselbe Richtung zeigen.

## Revendications

1. Un scooter (4) comprenant une armature (P), un nettoyeur à air (5), un siège (41), un couvercle du corps de scooter (C), un compartiment (42) et une unité électrique (43) sous ledit compartiment (42), où ladite armature (P) inclut deux tubes dans la direction longitudinale et plusieurs tubes dans la direction latérale du scooter; ledit nettoyeur à air (5) est fixé sur un premier (P3) desdits tubes dans la direction longitudinale, **caractérisé en ce que** l'entrée d'air (51) est arrangée sur un côté dudit premier (P3) desdits tubes dans la direction longitudinale et ladite sortie d'air (52) est arrangée sur l'autre côté dudit premier desdits tubes dans la direction longitudinale en respect d'une vue aérienne dudit scooter (4) arrangeant ainsi ladite entrée d'air (51) et de ladite sortie d'air (52) sur les différents côtés dudit premier (P3) desdits tubes dans la direction longitudinale. Ladite entrée d'air (51) est arrangée entre ledit premier (P3) desdits tubes dans la direction longitudinale et le couvercle du corps du scooter (C), ledit nettoyeur à air (5) est formé avec un premier renfoncement (53) sur une partie supérieure et un second renfoncement (54) sur une partie inférieure; ladite entrée d'air (51) et ladite sortie d'air (52) sont arrangées sur des positions verticales différentes dudit nettoyeur à air (5) et ledit premier (P3) desdits tubes inclut des sections avec une position verticale différente dans ledit scooter (4) et il y a au moins une section dudit premier (P3) desdits tubes, qui est arrangée sur le même niveau vertical que ladite sortie d'air (52).

2. Un scooter comme revendiqué dans la Revendication 1, où ladite entrée d'air (51) est arrangée de façon parallèle au premier (P3) desdits tubes dans la direction longitudinale.

3. Un scooter comme revendiqué dans la Revendication 1, incluant aussi un boîtier de transmission connecté à ladite armature via des amortisseurs.

4. Un scooter comme revendiqué dans la Revendication 1, où ledit second renfoncement (54) dudit nettoyeur à air (5) reçoit un compartiment dudit scooter.

5. Un scooter comme revendiqué dans la Revendication 1, où ladite entrée d'air (51) et ladite sortie d'air (52) sont arrangées dans la même direction.
